# EUROPÄISCHE PATENTSCHRIFT

(11) **EP 3 895 514 B1**
(45) Veröffentlichungstag und Bekanntmachung des Hinweises auf die Patenterteilung: **07.06.2023**
(21) Anmeldenummer: 20170047.3
(22) Anmeldetag: 17.04.2020
(51) Int. Cl.: A01B 49/02, A01B 63/111, A01B 73/04

(54) **LANDWIRTSCHAFTLICHE BODENBEARBEITUNGSVORRICHTUNG UND LANDWIRTSCHAFTLICHE MASCHINENKOMBINATION**
AGRICULTURAL SOIL WORKING DEVICE AND AGRICULTURAL MACHINE COMBINATION
DISPOSITIF DE TRAITEMENT DU SOL AGRICOLE ET COMBINAISON DE MACHINES AGRICOLES

(43) Veröffentlichungstag der Anmeldung: 20.10.2021
(73) Patentinhaber: Kverneland Group Soest GmbH, 59494 Soest (DE)
(72) Erfinder: KOTTENSTEDDE, Gregor, 4353 Klepp Stasjon (NO); NEUMANN, Björn, 4353 Klepp Stasjon (NO)
(74) Vertreter: Bittner, Thomas L.

(56) Entgegenhaltungen:
- DE-A1- 2 302 828
- DE-A1- 10 148 814
- DE-T2- 69 117 842
- DE-T2- 69 117 842
- DE-U1-202016 002 875
- DE-U1-202016 002 875

## Beschreibung

Die Erfindung betrifft eine landwirtschaftliche Bodenbearbeitungsvorrichtung und eine landwirtschaftliche Maschinenkombination.

### Hintergrund

Landwirtschaftliche Bodenbearbeitungsvorrichtungen oder -maschinen dienen dazu, im Feldbetrieb den Boden zu bearbeiten, wobei hierbei mittels Arbeitsgeräten oder -werkzeugen auf den Boden eingewirkt wird. Beispielsweise wird der Boden mittels Pflügen bearbeitet. Eine andere Art der Bodenbearbeitung ist die Verwendung von Eggen, um obere Bodenschichten zu lockern, Erdschollen zu zerkleinern, eine gute Krümelung für die Saatbettbereitung herzustellen und / oder Unkraut zu bekämpfen.

Bei Bodenbearbeitungsvorrichtungen kann vorgesehen sein, dass in Fahrtrichtung des Ackerschleppers oder Schleppers, welcher dazu dient, die Bodenbearbeitungsvorrichtung bei der Feldbearbeitung über den Boden zu bewegen, mehrere Bodenbearbeitungswerkzeuge hintereinander angeordnet sind, wobei die Bodenbearbeitungswerkzeuge von gleicher oder unterschiedlicher Bauart sein können. Die verschiedenen Bodenbearbeitungswerkzeuge sind hierbei üblicherweise an einem Tragrahmen aufgenommen.

Die Bodenbearbeitungsvorrichtung kann auf unterschiedliche Art und Weise an einen Ackerschlepper gekoppelt werden. Es sind Bodenbearbeitungsvorrichtungen bekannt, die lösbar an den Ackerschlepper koppeln und hinter diesem hergezogen werden. Hiervon zu unterscheiden sind Bodenbearbeitungsvorrichtungen, die mit einem Dreipunkt-Kraftheber des Ackerschleppers verbunden werden. Mit Hilfe einer solchen Dreipunkt-Ankopplung ist es regelmäßig ermöglicht, das Bodenbearbeitungsgerät vom Boden ab- oder auszuheben, insbesondere zum Transport auf der Straße. Aber auch bei der Feldbearbeitung kann die Bodenbearbeitungsvorrichtung mit Hilfe des Dreipunkt-Krafthebers im Vorgewende vom Boden gelöst werden.

Aus dem Dokument DE 691 17 842 T2 ist eine Bodenbearbeitungsmaschine mit einem Rahmen und Rahmenteilen bekannt, die mit Bodenbearbeitungsgliedern versehen sind, wobei der Rahmen aus einem mittleren Teilstück und mindestens zwei weiteren Teilstücken besteht, die in Bezug auf die Arbeitsrichtung der Maschine beiderseits des mittleren Teilstückes angeordnet und mit diesem über je eine Achse höhenbewegbar verbunden sind, und wobei jedes der weiteren Teilstücke über eine gelenkige Tragkonstruktion, die sich in Arbeitsrichtung erstreckt, mit einem der mit Bodenbearbeitungsgliedern versehenen Rahmenteile verbunden ist,. Ein vertikal bewegbares Rahmen-Teilstück ist mit dem zugehörigen, Bodenbearbeitungsglieder tragenden Rahmenteil über eine längenverstellbare Stabilisierstange verbunden, die sich im Wesentlichen quer zur Arbeitsrichtung der Maschine sowie im wesentlichen in Längsrichtung des Rahmen-Teilstückes und des Rahmenteiles erstreckt.

Aus dem Dokument DE 20 2016 002 875 U1 ist ein Bodenbearbeitungswerkzeug für eine landwirtschaftliche Bodenbearbeitungsmaschine mit wenigsten einem an der Maschine und / oder einem Maschinenteil verankerten Trägerabschnitt bekannt, dessen freies Ende einen Schneidbereich mit einer Schneidkante bildet, wobei: zumindest ein Teil des Schneidbereiches durch mindestens ein Schneidelement aus Hartstoffmaterial, insbesondere aus Hartmetall gebildet ist, das an einer dem freien Ende des Trägerabschnitts abgewandten Vorderseite zumindest einen Teil der Schneidkante trägt bzw. ausbildet; das freie Ende des Trägerabschnittes eine zumindest abschnittsweise ebene oder zumindest abschnittsweise konvex gewölbte Anlagefläche zur flächigen Verbindung mit einer jeweils korrespondierend, zumindest abschnittsweise eben und / oder abschnittsweise konkav konturierten Rückseite des mindestens einen Schneidelements aufweist; und die Rückseite des mindestens einen Schneidelements auf der Anlagefläche des freien Endes des Trägerabschnittes punktuell und/oder flächig haftend verbunden, insbesondere flächig verlötet ist.

Dokument DE 101 48 814 A1 offenbart ein mit zwei Reihen schräggestellter Hohlscheiben ausgerüstetes Bodenbearbeitgungsgerät, welches Niederhalter aufweist, die während der Arbeit das abgeschälte und mitgeführte Erdreich gezielt und kontrolliert ablegen, wobei die elastische Ausführung der Niederhalter ein Verstopfen des Geräts verhindert.

Im Dokument DE 2 302 828 ist ein Bodenbearbeitungsmaschine mit mehreren um aufwärts gerichtete Achsen drehbaren, mit mindestens einem Werkzeugträger versehenen Bearbeitungswerkzeugen offenbart, die in einer Reihe nebeneinander quer zur Fahrtrichtung angeordnet sind, wobei die Bearbeitungswerkzeuge in zwei Gruppen so angeordnet sind, dass die Arbeitsbereiche der beiden Werkzeuggruppen einander anschließend und die Bearbeitungswerkzeuge entsprechende Werkzeuggruppen unmittelbar durch einen gemeinsamen Antrieb antreibbar sind, der eine wenigstens nahezu in der Mitte zwischen den Werkzeuggruppen liegende, in Fahrtrichtung verlaufende Antriebswelle aufweist.

### Zusammenfassung

Aufgabe der Erfindung ist es, eine landwirtschaftliche Bodenbearbeitungsvorrichtung sowie eine landwirtschaftlichen Maschinenkombination anzugeben, bei denen für die Bodenbearbeitungsvorrichtung, die mittels Dreipunkt-Kraftheber am Ackerschlepper aufgenommen ist, eine effizientere und betriebssichere Nutzung ermöglicht ist.

Zur Lösung sind eine landwirtschaftliche Bodenbearbeitungsvorrichtung nach dem unabhängigen Anspruch 1 sowie eine landwirtschaftliche Maschinenkombination nach dem nebengeordneten Anspruch 14 geschaffen. Ausgestaltungen sind Gegenstand von abhängigen Unteransprüchen.

Die Bodenbearbeitungsvorrichtung ermöglicht es, im Betrieb auf den Boden zunächst mit den Bodenbearbeitungswerkzeugen und nachfolgend mit den Führungs- und Rückverfestigungswerkzeugen einzuwirken. Das Anbringen der Bodenbearbeitungsvorrichtung an dem Dreipunkt-Kraftheber eines Ackerschleppers erlaubt es, die Bodenbearbeitungsvorrichtung mit Hilfe des Dreipunkt-Krafthebers in unterschiedliche Höhenstellungen im Bezug zum Boden zu verlagern oder zu heben. Unabhängig hiervon kann das Bodenbearbeitungswerkzeug mit Hilfe der Einstelleinrichtung (zusätzlich) relativ zu dem Führungs- und Rückverfestigungswerkzeug sowie relativ zum Tragrahmen in verschiedene Stellungen verlagert werden. Auf diese Weise können die Führungs- und Rückverfestigungswerkzeuge einerseits sowie die Bodenbearbeitungswerkzeuge andererseits in unterschiedliche Stellungen in Bezug auf den Boden gebracht werden, beispielsweise zum Einstellen unterschiedlicher Arbeitstiefen.

Mit Hilfe der Schwenkeinrichtung können die sich beidseitig erstreckenden Rahmenbauteile mit den jeweils zugeordneten Werkzeugen zwischen der (horizontalen) Arbeitsstellung und der (vertikalen) Nicht-Arbeitsstellung auf einfache Weise verlagert werden. Hierbei ist aufgrund des Anordnens der die horizontale Schwenkachse bereitstellenden Gelenke, über die die Rahmenbauteile angelenkt sind, im mittleren Bereich der Anordnung mit Bodenwerkzeug und Führungs- und Rückverfestigungswerkzeug (im Blick von oben) das am Gelenk aufzunehmende Moment minimiert.

Es kann ein vereinfachter Tragrahmen zum Einsatz kommen, der sich nicht notwendigerweise in der Tiefe über die gesamte Breite der Bodenbearbeitungsvorrichtung erstrecken muss. Aufgrund der unabhängigen Verstellbarkeit des Bodenbearbeitungswerkzeugs relativ zu dem Führungs- und Rückverfestigungswerkzeug kann dieses bei zu hoher Belastung nach oben ausweichen.

Auch unterstützt das Anordnen der Gelenke im mittleren Bereich der Anordnung mit Bodenwerkzeug und Führungs- und Rückverfestigungswerkzeug (im Blick von oben) eine kompakte Bauweise. Der Abstand des Schwerpunkts zum Dreipunkt-Kraftheber des Schleppers ist verringert.

Die Einstelleinrichtung kann eingerichtet sein, die Bodenbearbeitungswerkzeuge über dem Boden jeweils zwischen einer ersten Arbeitsstellung entsprechend einer ersten Arbeitstiefe und einer zweiten Arbeitsstellung entsprechend einer zweiten Arbeitstiefe zu verlagern, wobei das Bodenbearbeitungswerkzeug hierbei in Bezug auf das jeweils zugeordnete Führungs- und Rückverfestigungswerkzeug zwischen einer ersten und einer zweiten relativen Stellung verlagert wird. Die zweite relative Stellung ist verschieden von der ersten relativen Stellung des Bodenbearbeitungswerkzeugs in Bezug zum jeweils zugeordneten Führungs- und Rückverfestigungswerkzeug. In den unterschiedlichen relativen Stellungen kann das jeweilige Bodenbearbeitungswerkzeug einen unterschiedlichen Abstand zum zu bearbeitenden Boden aufweisen. Die Arbeitstiefe oder -höhe des Bodenbearbeitungswerkzeugs kann unabhängig von der aktuellen Stellung des zugeordneten Führungs- und Rückverfestigungswerkzeugs eingestellt werden, insbesondere unabhängig von der Anbindung an den Dreipunkt-Kraftheber des Schleppers.

Die Bodenbearbeitungswerkzeuge können eine aktuelle Schwenkstellung des jeweils zugeordneten Rahmenbauteils aufrechterhaltend zwischen der ersten und der zweiten Arbeitsstellung verlagerbar sein. Unabhängig davon, in welcher Schwenkstellung sich das jeweils zugeordnete Rahmenbauteil aktuell befindet, sei es in einer Schrägstellung zum Boden oder in einer im Wesentlichen parallelen (horizontalen) Stellung zum Boden, was unterschiedliche Arbeitsstellungen sein können, kann das Bodenbearbeitungswerkzeug relativ hierzu verlagert werden, ohne dass es hierfür notwendig ist, auch das Führungs- und Rückverfestigungswerkzeug zu verlagern. Vielmehr kann dieses in einer momentanen Stellung verbleiben.

Die Bodenbearbeitungswerkzeuge können jeweils über eine erste Teilverbindung und eine hiervon getrennt gebildete zweite Teilverbindung an dem zugeordneten Rahmenbauteil verlagerbar aufgenommen sein. Die beiden Teilverbindungen ermöglichen jeweils eine Relativverlagerung des Bodenbearbeitungswerkzeugs in Bezug auf das zugeordnete Rahmenbauteil, beispielsweise mittels einer Schwenkbewegung. Alternativ können mehr als zwei Teilverbindungen vorgesehen sein, die dazu dienen, dass Bodenbearbeitungswerkzeug an dem jeweils zugeordneten Rahmenbauteil zu halten oder aufzunehmen.

Die erste und die zweite Teilverbindung können in Bezug auf den zentralen Abschnitt des Tragrahmens als eine proximale und eine distale Teilverbindung gebildet sein. Die proximale und die distale Teilverbindung können in einer Ausgestaltung in gegenüberliegenden Endbereichen des zugeordneten Rahmenbauteils angeordnet sein. Ergänzend kann beispielsweise mindestens eine weitere Teilverbindung in einem mittleren Bereich zwischen der proximalen und der distalen Teilverbindung vorgesehen sein. Bei dieser oder anderen Ausführungsformen sind die eine oder die mehreren Teilverbindungen als gelenkige Verbindung ausgeführt, um die Relativverlagerung des Bodenbearbeitungswerkzeugs in Bezug zum zugeordneten Rahmenbauteil zu ermöglichen.

Die erste und / oder die zweite Teilverbindung können in Bezug auf das Gelenk proximal zum zentralen Abschnitt des Tragrahmens angeordnet sein, wenn das zugeordnete Rahmenbauteil in der Arbeitsstellung angeordnet ist. Das Bodenbearbeitungswerkzeug wird so zumindest auch in einem Bereich zwischen dem zentralen Abschnitt des Tragrahmens und dem Gelenk mittels mindestens einer der Teilverbindungen am zugeordneten Tragrahmen gehalten.

Das Bodenbearbeitungswerkzeug kann über eine Parallelogramm-Verbindung an dem jeweils zugeordneten Rahmenbauteil verlagerbar aufgenommen sein. Alternativ zu der Parallelogramm-Verbindung kann Linearverstellung oder Gliedergetriebe mit Linearführung vorgesehen sein.

Der Parallelogramm-Verbindung kann ein Aktor der Einstelleinrichtung zugeordnet sein, mittels dessen die relative Stellung des Bodenbearbeitungswerkzeugs in Bezug auf das Führungs- und Rückverfestigungswerkzeug einstellbar ist. Als Aktor können zum Beispiel hydraulische, elektrische oder magnetische Aktoren zum Einsatz kommen. In einer Ausgestaltung kann der Aktor mit einem hydraulischen Zylinder gebildet sein. Sind mehrere Teilverbindungen vorgesehen, mit denen das Bearbeitungswerkzeug an dem jeweils zugeordneten Rahmenbauteil aufgenommen und gehalten wird, können unterschiedliche Aktoren jeweils einer der Teilverbindungen zugeordnet sein. Zum Beispiel kann an jeder Teilverbindung ein hydraulischer Zylinder vorgesehen sein, der im Betrieb aus- und eingefahren wird, um Verbindungsbauteile relativ zueinander zu schwenken.

Die Führungs- und Rückverfestigungswerkzeuge können jeweils an dem zugeordneten Rahmenbauteil aufgenommen oder angeordnet sein. Das Führungs- und Rückverfestigungswerkzeug kann mittels einer starren Verbindung an dem Rahmenbauteil montiert sein, so dass eine Relativbewegung, beispielsweise mittels Schwenken, in Bezug auf das Rahmenbauteil unterbunden ist, abgesehen von einer Rotation von Werkzeugelementen um eine Tragachse des Führungs- und Rückverfestigungswerkzeugs. Zur Montage des Führungs- und Rückverfestigungswerkzeugs an dem Rahmenbauteil können eine Flanschplatte und / oder ein oder mehrere Tragarme vorgesehen sein. Mit Hilfe der Flanschplatte und / oder der Tragarme kann die Tragachse des Führungs- und Rückverfestigungswerkzeugs in einer festen Stellung relativ zum Rahmenbauteil gehalten werden. Auf der Tragachse können ein oder mehrere Werkzeugelemente drehbar gelagert sein, die der Bodenbearbeitung dienen.

Die Bodenbearbeitungswerkzeuge können jeweils mit einer sich entlang des zugeordneten Rahmenbauteils erstreckenden Anordnung von Kreiseleggenzinken gebildet sein, die unterhalb einer Getriebewanne angeordnet und drehbar gelagert sind. In der Getriebewanne ist ein Getriebe angeordnet, an welches einerseits die drehbar gelagerten Kreiseleggenzinken und andererseits ein Antrieb koppeln, um die Kreiseleggenzinken im Betrieb zu rotieren. Die Anordnung von Kreiseleggenzinken wie auch die Getriebewanne können sich im Wesentlichen über die gesamte Länge des zugeordneten Rahmenbauteils erstrecken. Wird das Bodenbearbeitungswerkezeug relativ zum Rahmenbauteil (und relativ zum Führungs- und Rückverfestigungswerkzeug) verlagert, werden Getriebewanne und Kreiseleggenzinken gemeinsam verlagert, beispielsweise geschwenkt. Die Verbindung zwischen dem zugeordneten Rahmenbauteil und dem Bodenbearbeitungswerkzeug, sei es mit einer oder mehreren Teilverbindungen, kann auf Seiten des Bodenwerkzeugs mit der Getriebewanne verbunden sein, beispielsweise deckseitig auf einem Gehäuse der Getriebewanne.

Die Führungs- und Rückverfestigungswerkzeuge können jeweils mit einer sich entlang des zugeordneten Rahmenbauteils erstreckenden Walze gebildet sein.

Schwenkbar am Tragrahmen aufgenommene Aktoren der Schwenkeinrichtung können beim Verlagern des jeweils zugeordneten Rahmenbauteils zwischen Arbeitsstellung und Nicht-Arbeitsstellung in einer jeweiligen Schwenkebene des Rahmenbauteils schwenken. Der eine oder die mehreren Aktoren der Schwenkeinrichtung können beispielsweise jeweils mit einem hydraulischen Zylinder gebildet sein, welcher beim Schwenken der Rahmenbauteile aus- und eingefahren und hierbei in der Schwenkebene des Rahmenbauteils schwenkend verlagert wird.

Mindestens einem der Bodenbearbeitungswerkzeuge kann eine Überlastsicherungsvorrichtung zugeordnet sein, die eingerichtet ist, das mindestens eine Bodenbearbeitungswerkzeug im Betrieb beim Auftreten einer Überlast an dem mindestens einen Bodenbearbeitungswerkzeug relativ zum zugeordneten Rahmenbauteil sowie relativ zum Führungs- und Rückverfestigungswerkzeug aus einer momentanen Arbeitsstellung in eine angehobene Stellung zu verlagern. In der angehobenen Stellung wirkt keine Überlast mehr auf das Bodenbearbeitungswerkzeug. Die Überlastsicherungsvorrichtung kann hierbei in einer Ausgestaltung eingerichtet sein, das mindestens eine Bodenbearbeitungswerkzeug zwischen der momentanen Arbeitsstellung und der angehobenen Stellung selbsttätig zu verlagern.

In einer Ausgestaltung ist die Überlastsicherungsvorrichtung mit einer Sensoreinrichtung gebildet, welche eingerichtet ist, eine im Betrieb an den Bodenbearbeitungswerkzeugen auftretende Überlast (Kraft) zu detektieren und entsprechende Messsignale bereitzustellen, die die Überlast anzeigen. Die Messsignale werden an eine mit der Sensoreinrichtung in Verbindung stehende Steuereinrichtung gegeben, die auf dem Ackerschlepper oder der landwirtschaftliche Bodenbearbeitungsvorrichtung angeordnet ist. Die Steuereinrichtung stellt als Reaktion hierauf Überlaststeuersignale bereit, welche mittels der Einstelleinrichtung bewirken, dass die Bodenbearbeitungswerkzeuge relativ zum jeweils zugeordneten Rahmenbauteil und relativ zu dem Führungs- und Rückverfestigungswerkzeug - im Vergleich zu einer vorherigen Arbeitsstellung - angehoben (aber im Kontakt mit dem Boden verbleibend) oder ganz vom Boden ausgehoben werden, um der Überlast zu begegnen. Das Anheben oder Ausheben erfolgt mit der den Bodenwerkzeugen zugeordneten Einstelleinrichtung, welche ein oder mehrere Aktoren aufweist, die zum Beispiel mit Parallelogramm-Verbindungen zusammenwirken. Die Aktoren können beispielsweise mit hydraulischen Zylindern gebildet sein.

Die Sensoreinrichtung detektiert Messwerte, die im Fall der Überlast für eine übermäßige Krafteinwirkung auf die Bodenbearbeitungswerkzeuge indikativ sind. Zum Beispiel können sie anzeigen, dass ein Schwellwert erreicht oder überschritten ist. Die Sensoreinrichtung kann mit einem Kraftsensor gebildet sein. Im Fall der Verwendung von hydraulischen Zylindern kann diesen ein Drucksensor zugeordnet sein, der bei Überlast erhöhte Druckwerte erfasst, die die Überlast anzeigen.

In Verbindung mit der Vorrichtung zur Überlastsicherung kann in einer alternativen Ausführung an einem Hydraulikzylinder, welcher als Aktor zumindest einem der Bodenbearbeitungswerkzeuge zu dessen Einstellung (Einstellung der Höhe relativ zum Boden) zugeordnet ist, ein Hydraulikventil vorgesehen sein, welches ab einem vorbestimmten (einstellbaren) Druck (Überlast- oder Schwellwertdruck) Hydrauliköl aus dem Hydraulikzylinder in einen zugeordneten Membranspeicher abfließen lässt. Ein solches Übertreten des Hydrauliköls findet statt, wenn auf das Bodenwerkzeug in der Betriebs- oder Arbeitsstellung eine Überlast wirkt. Das Abließen des Hydrauliköls in den Membranspeicher bewirkt dann, dass das zugeordnete Bodenbearbeitungswerkzeug, für welches die Überlast auftritt, mittels des Hydraulikzylinders automatisch oder selbsttätig relativ zum jeweils zugeordneten Rahmenbauteil und relativ zu dem Führungs- und Rückverfestigungswerkzeug - im Vergleich zu der vorher eingestellten Arbeitsstellung - angehoben (aber im Kontakt mit dem Boden verbleibend) oder ganz vom Boden ausgehoben werden, um der Überlast zu begegnen.

Hier übernimmt das Hydraulikventil die Funktion von Sensor und Aktuator. Es lässt ab einem voreingestellten Überlastdruck eigenständig das Hydrauliköl in den Membranspeicher abfließen, ohne dass ein zusätzlicher Sensor benötigt wird, welcher das Signal an einen Aktuator gibt. Diese Funktion ist mechanisch im Ventil abgebildet. Somit übernimmt das Hydraulikventil die Funktionen von Sensoreinrichtung und Steuereinrichtung und nimmt Einfluss auf die Einstelleinrichtung.

Fällt der Druck im Hydraulikzylinder wieder unter den Überlastdruck, fließt das Hydrauliköl selbsttätig wieder zurück in den Hydraulikzylinder, wodurch das Bodenbearbeitungswerkzeug wieder abgesenkt wird, zum Beispiel in die zuvor eingestellte Arbeitsstellung.

Die vorangehend im Zusammenhang mit der Bodenbearbeitungsvorrichtung erläuterten Ausgestaltungen können in Verbindung mit der landwirtschaftlichen Maschinenkombination entsprechend vorgesehen sein.

In den verschiedenen Ausführungsformen können die beiden Rahmenbauteile, die sich auf den gegenüberliegenden Seiten der Bodenbearbeitungsvorrichtung (mit Blick von oben) im mittleren Bereich der Anordnung vom Bodenbearbeitungswerkzeug und Führungs- und Rückverfestigungswerkzeug erstrecken, aus einem Metall-Hohlprofil sein, beispielsweise einem Metallrohr mit rundem oder eckigem Querschnitt. Hieran sind die Bodenbearbeitungswerkzeuge sowie die Führungs- und Rückverfestigungswerkzeuge direkt oder indirekt (also über eine oder mehrere Verbindungen) aufgenommen und gehalten.

### Beschreibung von Ausführungsbeispielen

Im Folgenden werden weitere Ausführungsbeispiele unter Bezugnahme auf Figuren einer Zeichnung erläutert. Hierbei zeigen:
- Fig. 1: eine schematische perspektivische Darstellung einer Bodenbearbeitungsvorrichtung in einer Arbeitsstellung von schräg hinten;
- Fig. 2: eine schematische perspektivische Darstellung der Bodenbearbeitungsvorrichtung aus Fig. 1 in der Arbeitsstellung von schräg vorn;
- Fig. 3: eine schematische perspektivische Darstellung der Bodenbearbeitungsvorrichtung aus Fig. 1 in einer Nicht-Arbeitsstellung von schräg hinten;
- Fig. 4: eine schematische perspektivische Darstellung der Bodenbearbeitungsvorrichtung aus Fig. 1 in der Nicht-Arbeitsstellung von schräg vorn;
- Fig. 5: eine schematische perspektivische Darstellung einer Anordnung mit Bodenbearbeitungswerkzeug und Führungs- und Rückverfestigungswerkzeug in einer ersten relativen Stellung zueinander und
- Fig. 6: eine schematische perspektivische Darstellung der Anordnung aus Fig. 5 mit Bodenwerkzeug und Führungs- und Rückverfestigungswerkzeug in einer zweiten relativen Stellung zueinander, wobei das Bodenbearbeitungswerkzeug in Bezug zum Führungs- und Rückverfestigungswerkzeug zum Boden hin abgesenkt ist.

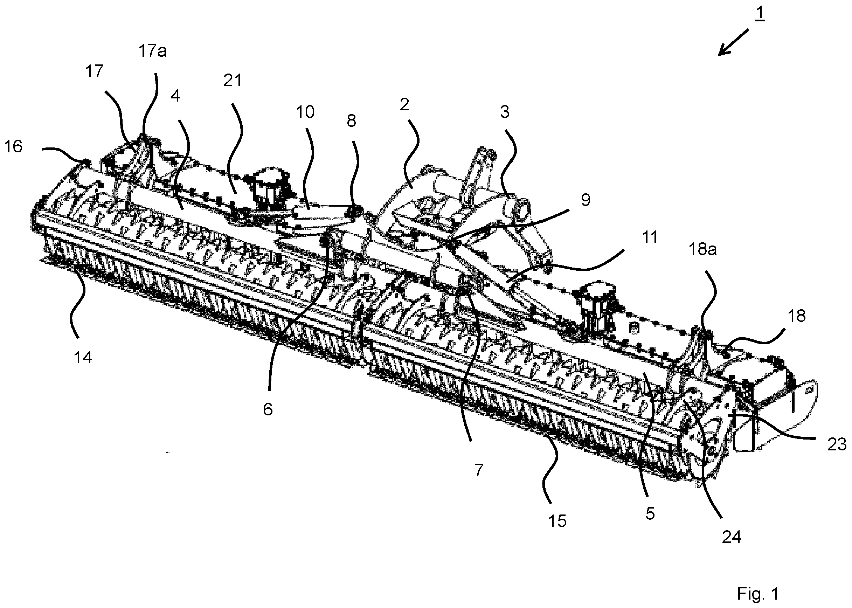

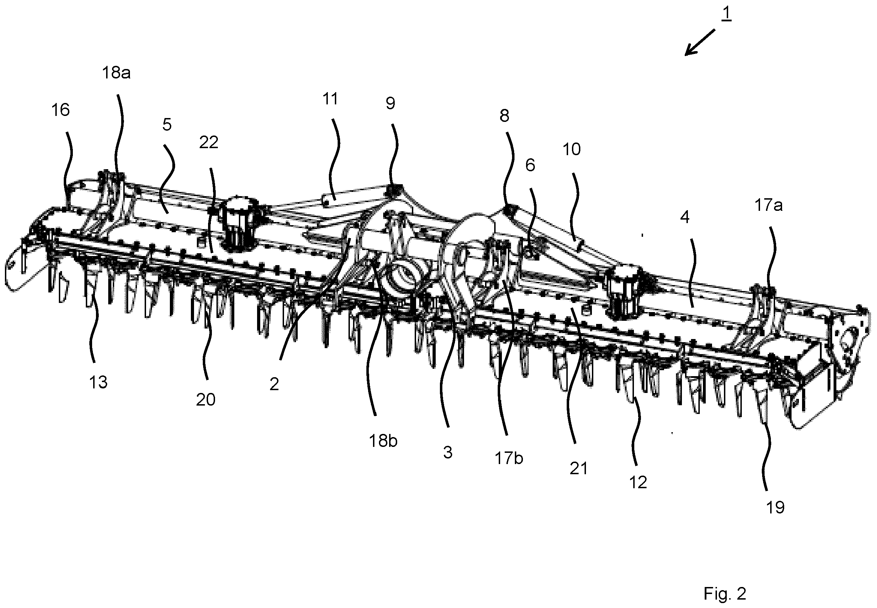

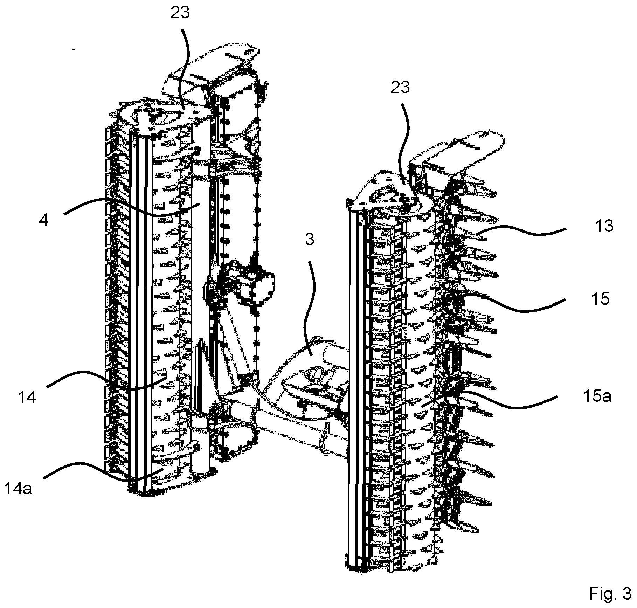

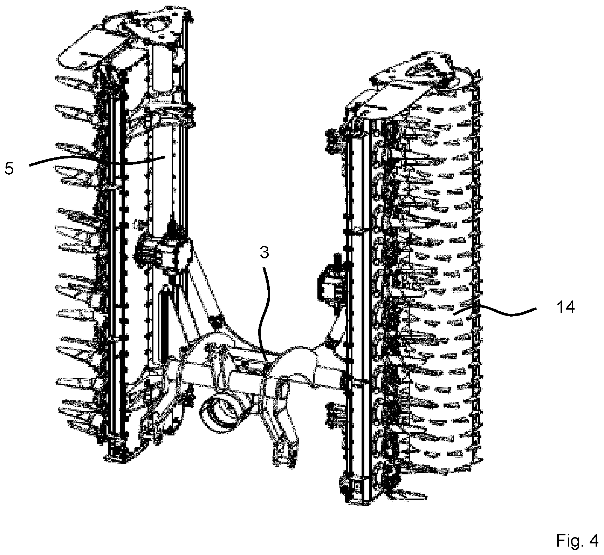

In den Fig. 1 und 2 ist eine Bodenbearbeitungsvorrichtung 1 in einer Arbeitsstellung perspektivisch von schräg hinten und schräg vorn gezeigt. Es ist ein Tragrahmen 2 vorgesehen, welcher in einem zentralen Abschnitt 3 eingerichtet ist, mit einem Dreipunkt-Kraftheber eines Ackerschleppers (nicht dargestellt) in an sich bekannter Art und Weise verbunden zu werden. Auf gegenüberliegenden Seiten erstrecken sich Rahmenbauteile 4, 5, die im dargestellten Ausführungsbeispiel jeweils als ein Rohrbauteil ausgeführt sind. Die Rahmenbauteile 4, 5 sind am Tragrahmen 2 über ein jeweils zugeordnetes Gelenk 6, 7 schwenkbar aufgenommen. Den Rahmenbauteilen 4, 5 ist als Teil einer Schwenkeinrichtung 8, 9 jeweils ein Aktor 10, 11 zugeordnet, mit dessen Betätigung die Rahmenbauteile 4, 5 zwischen der in den Fig. 1 und 2 gezeigten (horizontalen) Arbeitsstellung und einer (vertikalen) Nicht-Arbeitsstellung verlagert werden können, die in den Fig. 3 und 4 gezeigt ist.

Den Rahmenbauteilen 4, 5 sind jeweils ein Bodenbearbeitungswerkzeug 12, 13 (vgl. Fig. 2) sowie ein Führungs- und Rückverfestigungswerkzeug 14, 15 (vgl. Fig. 1) zugeordnet. Mit Blick von oben auf die Anordnung mit Bodenbearbeitungswerkzeug 12, 13 sowie Führungs- und Rückverfestigungswerkzeug 14, 15 in der den Fig. 1 und 2 gezeigten Arbeitsstellung sind das Gelenk 6, 7 sowie die Rahmenbauteile 4, 5 in einem mittleren Bereich 16 angeordnet. Bei der gezeigten Ausführungsform erstrecken sich auch die Hydraulikzylinder 10, 11 entlang des mittleren Bereiches 13.

Werden die Rahmenbauteile 4, 5 mit dem hieran aufgenommenen Bodenwerkzeugen 12, 13 sowie den hieran ebenfalls aufgenommenen oder montierten Führungs- und Rückverfestigungswerkzeugen 14, 15 zwischen der Arbeitsstellung und der Nicht-Arbeitsstellung verschwenkt, schwenken die Aktoren 10, 11 ebenso in einer aufrechtstehenden (vertikalen) Schwenkebene.

Die Bodenwerkzeuge 12, 13 sind mit Hilfe einer jeweils zugeordneten Parallelogramm-Verbindung 17, 18 an dem zugeordneten Rahmenbauteil 4, 5 und hierzu relativ verlagerbar angeordnet. Die Parallelogramm-Verbindung 17, 18 weisen in der gezeigten Ausführungsform jeweils Teilverbindungen 17a, 17b, 18a, 18b auf, die in gegenüberliegenden Endbereichen der Rahmenbauteile 4, 5 ausgebildet sind.

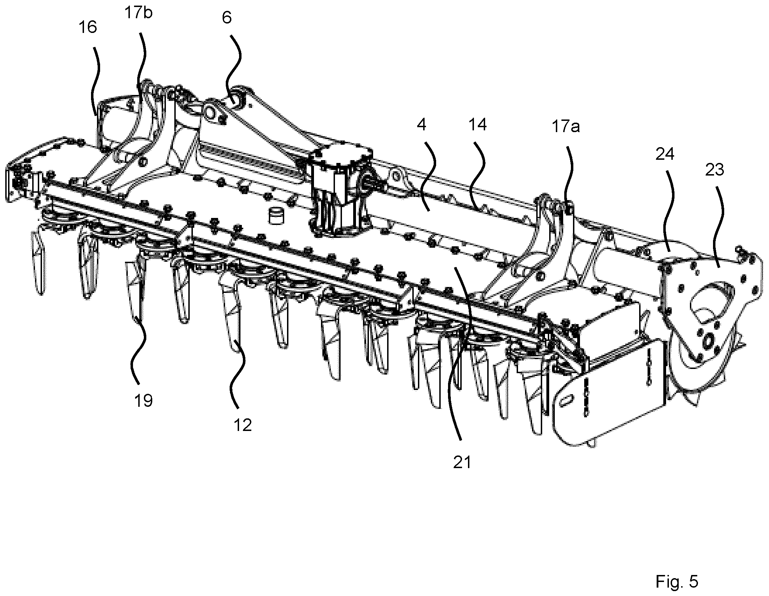

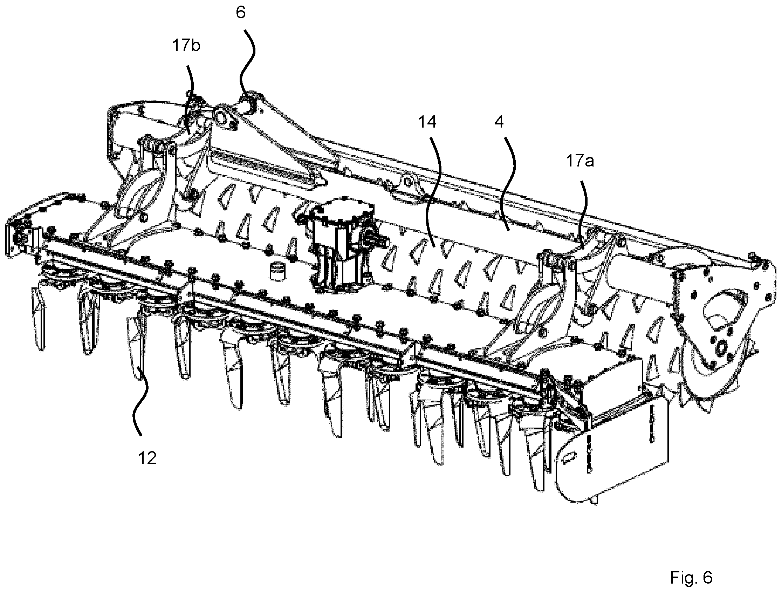

Den Parallelogramm-Verbindungen 17, 18 sind ein oder mehrere Aktoren zugeordnet, beispielsweise in Form von hydraulischen Zylindern, um die Verlagerung der Bodenbearbeitungswerkzeuge 12, 13 relativ zu dem zugeordneten Rahmenbauteil 4, 5 zu bewirken. Hierzu zeigen die Fig. 4 und 5 für eine Anordnung mit Bodenbearbeitungswerkzeug 12 und Führungs- und Rückverfestigungswerkzeug 14 unterschiedliche Verlagerungsstellungen. Mittels Betätigen der zugeordneten Parallelogramm-Verbindung 18 ist das Bodenbearbeitungswerkzeug 12 in Fig. 6 im Vergleich zur Fig. 5 gegenüber dem Rahmenbauteil 4 abgesenkt zum Boden hin. Auf diese Weise ist eine Einstellung des Bodenwerkzeugs 14, insbesondere zum Ändern einer Arbeitstiefe, unabhängig von einer Verlagerungsstellung des Rahmenbauteils 4 und des Führungs- und Rückverfestigungswerkzeugs 14 ermöglicht. Und zusätzlich ist die Funktion des Ausweichens bei zu hoher Belastung (Überlast) auf das Bodenbearbeitungswerkzeug 12 ermöglicht.

Es kann vorgesehen sein, an oder mit den Aktoren, die den Parallelogramm-Verbindungen 17, 18 zugeordnet sind und zum Beispiel in Form von Hydraulikzylindern gebildet sind, eine Überlastsicherungsvorrichtung für die Bodenbearbeitungswerkzeuge 12, 13 auszubilden, wie dies oben näher erläutert ist.

Bei der gezeigten Ausführungsform sind die Bodenbearbeitungswerkzeuge 12, 13 jeweils mit einer Anordnung von Kreiseleggenzinken 19, 20 gebildet, die sich in Längsrichtung des jeweils zugeordneten Rahmenbauteils 4, 5 erstrecken. Die Kreiseleggenzinken 19, 20 sind unterhalb einer Getriebewanne 21, 22 angeordnet und drehbar gelagert. Ausgestaltungen für eine solche Kreiselegge sind als solche in verschiedenen Ausführungsformen bekannt.

Bei dem gezeigten Ausführungsbeispiel sind die Führungs- und Rückverfestigungswerkzeuge 14, 15 mit einer jeweiligen drehbar gelagerten Bodenwalze 14a, 15a gebildet. Die Führungs- und Rückverfestigungswerkzeuge 14, 15 sind mittels einer jeweiligen Flanschplatte 23 sowie Tragarmen 24 mit dem zugeordneten Rahmenbauteil 4, 5 verbunden, beispielweise starr. Andere Führungs- oder Rückverfestigungswerkzeuge können vorgesehen sein.

Im Betrieb sind die Bodenwerkzeuge 12, 13 in Bezug auf das jeweils zugeordnete Rahmenbauteil 4, 5 in Fahrtrichtung voranlaufend. Demgegenüber sind die Führungs- und Rückverfestigungswerkzeuge 14, 15 nachlaufend zu dem jeweiligen Rahmenbauteil 4, 5 angeordnet.

Die in der vorstehenden Beschreibung, den Ansprüchen sowie der Zeichnung offenbarten Merkmale können sowohl einzeln als auch in beliebiger Kombination für die Verwirklichung der verschiedenen Ausführungen von Bedeutung sein.

## Patentansprüche

1. Landwirtschaftliche Bodenbearbeitungsvorrichtung (1), mit:
- einem Tragrahmen (2);
- einer Verbindungseinrichtung, die in einem zentralen Abschnitt (3) an dem Tragrahmen (2) gebildet und eingerichtet ist, mit einem Dreipunkt-Kraftheber eines Ackerschleppers verbunden zu werden;
- Rahmenbauteilen (4, 5), die sich auf gegenüberliegenden Seiten des Tragrahmens (2) erstrecken und jeweils schwenkbar mit einem eine horizontale Schwenkachse bereitstellenden Gelenk (6; 7) verbunden sind, derart, dass die Rahmenbauteile (4, 5) zwischen einer Arbeitsstellung, in welcher sich das Rahmenbauteil (4; 5) in horizontaler Richtung quer zur Fahrtrichtung erstreckt, und einer Nicht-Arbeitsstellung schwenkbar sind, in welcher sich das Rahmenbauteil (4; 5) in vertikaler Richtung erstreckt;
- Bodenbearbeitungswerkzeugen (12, 13), welche an dem jeweils zugeordneten Rahmenbauteil (4; 5) gehalten und entlang des Rahmenteils ausgebildet sind, wobei die Bodenbearbeitungswerkzeuge (12, 13) in der Arbeitsstellung in Bezug auf das jeweils zugeordnete Rahmenbauteil (4; 5) in Fahrtrichtung voranlaufend angeordnet sind;
- Führungs- und Rückverfestigungswerkzeugen (14, 15), welche an dem jeweils zugeordneten Rahmenbauteil (4; 5) gehalten und entlang des Rahmenbauteils (4; 5) ausgebildet sind, wobei die Führungs- und Rückverfestigungswerkzeuge (14, 15) in der Arbeitsstellung in Bezug auf das jeweils zugeordnete Rahmenbauteil (4; 5) in Fahrtrichtung nachlaufend angeordnet sind, so dass in der Arbeitsstellung mit Blick von oben jeweils das zugeordnete Gelenk (6; 7) wie auch das zugeordnete Rahmenbauteil (4; 5) in einem mittleren Bereich der auf den gegenüberliegenden Seiten des Tragrahmens ausgebildeten Anordnungen mit Bodenbearbeitungswerkzeug (12; 13) und Führungs- und Rückverfestigungswerkzeug (14; 15) angeordnet sind;
- einer Einstelleinrichtung, die mit dem Bodenbearbeitungswerkzeug (12; 13) verbunden und eingerichtet ist, eine relative Stellung des Bodenbearbeitungswerkzeugs (12; 13) zu dem Führungs- und Rückverfestigungswerkzeug (14; 15) sowie zum Tragrahmen (2) einzustellen; und
- einer Schwenkeinrichtung, die mit den Rahmenbauteilen (4, 5) jeweils verbunden und eingerichtet ist, die Rahmenbauteile (4, 5) mit dem zugeordneten Bodenbearbeitungswerkzeug (12; 13) und dem zugeordneten Führungs- und Rückverfestigungswerkzeug (14; 15) zwischen der Arbeitsstellung und der Nicht-Arbeitsstellung zu verlagern.

2. Landwirtschaftliche Bodenbearbeitungsvorrichtung (1) nach Anspruch 1, **dadurch gekennzeichnet, dass** die Einstelleinrichtung eingerichtet ist, die Bodenbearbeitungswerkzeuge (12, 13) über dem Boden jeweils zwischen einer ersten Arbeitsstellung mit einer ersten Arbeitstiefe und einer zweiten Arbeitsstellung mit einer zweiten Arbeitstiefe zu verlagern, wobei das Bodenbearbeitungswerkzeug (12; 13) hierbei in Bezug auf das jeweils zugeordnete Führungs- und Rückverfestigungswerkzeug (14; 15) zwischen einer ersten und einer zweiten relativen Stellung verlagert wird.

3. Landwirtschaftliche Bodenbearbeitungsvorrichtung (1) nach Anspruch 2, **dadurch gekennzeichnet, dass** die Bodenbearbeitungswerkzeuge (12, 13) eine aktuelle Schwenkstellung des jeweils zugeordneten Rahmenbauteils (4; 5) aufrechterhaltend zwischen der ersten und der zweiten Arbeitsstellung verlagerbar sind.

4. Landwirtschaftliche Bodenbearbeitungsvorrichtung (1) nach mindestens einem der vorangehenden Ansprüche, **dadurch gekennzeichnet, dass** die Bodenbearbeitungswerkzeuge (12, 13) jeweils über eine erste Teilverbindung und eine hiervon getrennt gebildete zweite Teilverbindung an dem zugeordneten Rahmenbauteil (4; 5) verlagerbar aufgenommen sind.

5. Landwirtschaftliche Bodenbearbeitungsvorrichtung (1) nach Anspruch 4, **dadurch gekennzeichnet, dass** die erste und die zweite Teilverbindung in Bezug auf den zentralen Abschnitt des Tragrahmens (2) als eine proximale und eine distale Teilverbindung gebildet sind.

6. Landwirtschaftliche Bodenbearbeitungsvorrichtung (1) nach Anspruch 4 oder 5, **dadurch gekennzeichnet, dass** die erste und / oder die zweite Teilverbindung in Bezug auf das Gelenk proximal zum zentralen Abschnitt des Tragrahmens angeordnet ist, wenn das zugeordnete Rahmenbauteil (4; 5) in der Arbeitsstellung angeordnet ist.

7. Landwirtschaftliche Bodenbearbeitungsvorrichtung (1) nach mindestens einem der vorangehenden Ansprüche, **dadurch gekennzeichnet, dass** das Bodenbearbeitungswerkzeug (12; 13) über eine Parallelogramm-Verbindung (17; 18) an dem jeweils zugeordneten Rahmenbauteil (4; 5) verlagerbar aufgenommen ist.

8. Landwirtschaftliche Bodenbearbeitungsvorrichtung (1) nach Anspruch 7, **dadurch gekennzeichnet, dass** der Parallelogramm-Verbindung (17; 18) ein Aktor der Einstelleinrichtung zugeordnet ist, mittels dessen Betätigung die relative Stellung des Bodenbearbeitungswerkzeugs (12; 13) zu dem Führungs- und Rückverfestigungswerkzeug (14; 15) einstellbar ist.

9. Landwirtschaftliche Bodenbearbeitungsvorrichtung (1) nach mindestens einem der vorangehenden Ansprüche, **dadurch gekennzeichnet, dass** die Führungs- und Rückverfestigungswerkzeuge (14, 15) jeweils an dem zugeordneten Rahmenbauteil (4; 5) aufgenommen sind.

10. Landwirtschaftliche Bodenbearbeitungsvorrichtung (1) nach mindestens einem der vorangehenden Ansprüche, **dadurch gekennzeichnet, dass** die Bodenbearbeitungswerkzeuge (12, 13) jeweils mit einer sich entlang des zugeordneten Rahmenbauteils (4; 5) erstreckenden Anordnung von Kreiseleggenzinken gebildet sind, die unterhalb einer Getriebewanne angeordnet und drehbar gelagert sind.

11. Landwirtschaftliche Bodenbearbeitungsvorrichtung (1) nach mindestens einem der vorangehenden Ansprüche, **dadurch gekennzeichnet, dass** die Führungs- und Rückverfestigungswerkzeuge (14, 15) jeweils mit einer sich entlang des zugeordneten Rahmenbauteils (4; 5) erstreckenden Walze (14a; 15a) gebildet sind.

12. Landwirtschaftliche Bodenbearbeitungsvorrichtung (1) nach mindestens einem der vorangehenden Ansprüche, **dadurch gekennzeichnet, dass** schwenkbar am Tragrahmen (2) aufgenommene Aktoren der Schwenkeinrichtung beim Verlagern des jeweils zugeordneten Rahmenbauteils (4; 5) zwischen Arbeitsstellung und Nicht-Arbeitsstellung in einer jeweiligen Schwenkebene des Rahmenbauteils (4; 5) schwenken.

13. Landwirtschaftliche Bodenbearbeitungsvorrichtung (1) nach mindestens einem der vorangehenden Ansprüche, **dadurch gekennzeichnet, dass** mindestens einem der Bodenbearbeitungswerkzeuge (12; 13) eine Überlastsicherungsvorrichtung zugeordnet ist, die eingerichtet ist, das mindestens eine Bodenbearbeitungswerkzeug (12; 13) im Betrieb beim Auftreten einer Überlast an dem mindestens einen Bodenbearbeitungswerkzeug (12; 13) relativ zum zugeordneten Rahmenbauteil (4; 5) sowie relativ zum Führungs- und Rückverfestigungswerkzeug (14, 15) aus einer momentanen Arbeitsstellung in eine angehobene Stellung zu verlagern.

14. Landwirtschaftliche Bodenbearbeitungsvorrichtung (1) nach Anspruch 13, **dadurch gekennzeichnet, dass** die Überlastsicherungsvorrichtung eingerichtet ist, das mindestens eine Bodenbearbeitungswerkzeug (12; 13) zwischen der momentanen Arbeitsstellung und der angehobenen Stellung selbsttätig zu verlagern.

15. Landwirtschaftliche Maschinenkombination, mit einem Ackerschlepper und einer landwirtschaftliche Bodenbearbeitungsvorrichtung (1) nach mindestens einem der vorangehenden Ansprüche, wobei die landwirtschaftliche Bodenbearbeitungsvorrichtung (1) mit einem Dreipunkt-Kraftheber des Ackerschleppers verbunden ist.

## Claims

1. An agricultural soil cultivation device (1), having:
- a support frame (2);
- a connecting device, which is formed in a central section (3) on the support frame (2) and configured to be connected to a three-point hitch of an agricultural tractor;
- frame members (4, 5), which extend on opposite sides of the support frame (2) and are respectively pivotably connected to a hinge (6; 7) providing a horizontal pivot axis in such a way that the frame members (4, 5) can be pivoted between a working position, in which the frame member (4; 5) extends in a horizontal direction transverse to the direction of travel, and a non-working position, in which the frame member (4; 5) extends in a vertical direction;
- soil cultivation tools (12, 13), which are held on the respectively associated frame member (4; 5) and are formed along the frame part, wherein the soil cultivation tools (12, 13) in the working position are arranged to run ahead in the direction of travel with respect to the respectively associated frame component (4; 5);
- guiding and reconsolidation tools (14, 15), which are held on the respectively associated frame member (4; 5) and are formed along the frame member (4; 5), wherein the guiding and reconsolidation tools (14, 15) in the working position are arranged to trail in the direction of travel with respect to the respectively associated frame member (4; 5) such that in the working position, looking from above, respectively, the associated hinge (6; 7) as well as the associated frame member (4; 5) are arranged in a central region of the arrangements formed on the opposite sides of the support frame with soil cultivation tool (12; 13) and guiding and reconsolidation tool (14; 15);
- an adjusting device, which is connected to the soil cultivation tool (12; 13) and configured to adjust a relative position of the soil cultivation tool (12; 13) to the guiding and reconsolidation tool (14; 15) as well as to the support frame (2); and
- a pivoting device, which is respectively connected to the frame members (4, 5) and configured to move the frame members (4, 5) with the associated soil cultivation tool (12; 13) and the associated guiding and reconsolidation tool (14; 15) between the working position and the non-working position.

2. The agricultural soil cultivation device (1) according to Claim 1, **characterized in that** the adjusting device is configured to move the soil cultivation tools (12; 13) over the ground respectively between a first working position with a first working depth and a second working position with a second working depth, wherein the soil cultivation tool (12; 13) is hereby moved between a first and a second relative position with respect to the respectively assigned guiding and reconsolidation tool (14; 15).

3. The agricultural soil cultivation device (1) according to Claim 2, **characterized in that** the soil cultivation tools (12, 13) can be moved between the first and second working position while maintaining a current pivoting position of the respectively assigned frame member (4; 5).

4. The agricultural soil cultivation device (1) according to at least one of the preceding claims, **characterized in that** the soil cultivation tools (12, 13) are each displaceably accommodated on the associated frame member (4; 5) via a first partial connection and a second partial connection formed separately therefrom.

5. The agricultural soil cultivation device (1) according to Claim 4, **characterized in that** the first and second partial connection are formed as a proximal and a distal partial connection with respect to the central section of the support frame (2).

6. The agricultural soil cultivation device (1) according to Claim 4 or 5, **characterized in that** the first and / or second partial connection is arranged proximal to the central section of the support frame with respect to the hinge when the associated frame member (4; 5) is arranged in the working position.

7. The agricultural soil cultivation device (1) according to at least one of the preceding claims, **characterized in that** the soil cultivation tool (12; 13) is displaceably accommodated on the respectively associated frame member (4; 5) via a parallelogram connection (17; 18).

8. The agricultural soil cultivation device (1) according to Claim 7, **characterized in that** the parallelogram connection (17; 18) is assigned an actuator of the adjusting device, by means of the actuation of which the relative position of the soil cultivation tool (12; 13) to the guiding and reconsolidation tool (14; 15) can be adjusted.

9. The agricultural soil cultivation device (1) according to at least one of the preceding claims, **characterized in that** the guiding and reconsolidation tools (14, 15) are each accommodated on the associated frame member (4; 5).

10. The agricultural soil cultivation device (1) according to at least one of the preceding claims, **characterized in that** the soil cultivation tools (12, 13) are eacg formed with an arrangement of rotary harrow tines extending along the associated frame member (4; 5), which tines are arranged and rotatably mounted below a gear trough.

11. The agricultural soil cultivation device (1) according to at least one of the preceding claims, **characterized in that** the guiding and reconsolidation tools (14, 15) are each formed with a roller (14a; 15a) extending along the associated frame member (4; 5).

12. The agricultural soil cultivation device (1) according to at least one of the preceding claims, **characterized in that** actuators of the pivoting device, which are pivotably accommodated on the support frame (2), pivot in a respective pivoting plane of the frame member (4; 5) when the respectively associated frame member (4; 5) is moved between the working position and the non-working position.

13. The agricultural soil cultivation device (1) according to at least one of the preceding claims, **characterized in that** at least one of the soil cultivation tools (12; 13) is assigned an overload protection device, which is configured to move the at least one soil cultivation tool (12; 13) in operation from a momentary working position to a raised position relative to the associated frame member (4; 5) and relative to the guiding and reconsolidation tool (14, 15) when an overload occurs on the at least one soil cultivation tool (12; 13).

14. The agricultural soil cultivation tool (1) according to Claim 13, **characterized in that** the overload protection device is configured to automatically move the at least one soil cultivation tool (12; 13) between the momentary working position and the raised position.

15. An agricultural machine combination, having an agricultural tractor and an agricultural soil cultivation device (1) according to at least one of the preceding claims, wherein the agricultural soil cultivation device (1) is connected to a three-point hitch of the agricultural tractor.

## Revendications

1. Dispositif agricole de travail du sol (1), comprenant :
- un châssis porteur (2) ;
- un système d'assemblage, qui dans une partie centrale (3) est conçu sur le châssis porteur (2) et est aménagé pour être assemblé avec un attelage à trois points d'un tracteur agricole ;
- des éléments de châssis (4, 5), qui s'étendent sur des côtés opposés du châssis porteur (2) et dont chacun est assemblé de manière pivotante avec une articulation (6 ; 7), mettant à disposition un axe de pivotement horizontal, de telle sorte que les éléments de châssis (4, 5) soient susceptibles de pivoter entre une position de travail, dans laquelle l'élément de châssis (4 ; 5) s'étend dans la direction horizontale, à la transversale de la direction de déplacement et une position de non-travail, dans laquelle l'élément de châssis (4 ; 5) s'étend dans la direction verticale ;
- des outils de travail du sol (12, 13), lesquels sont maintenus sur l'élément de châssis (4 ; 5) respectivement associé et sont conçus le long de la partie de châssis, dans la position de travail, les outils de travail du sol (12, 13) étant placés en amont dans la direction de déplacement, en rapport à l'élément de châssis (4 ; 5) associé ;
- des outils de guidage et de rappuyage (14, 15), lesquels sont maintenus sur l'élément de châssis (4 ; 5) respectivement associé et qui sont conçus le long de l'élément de châssis (4 ; 5), dans la position de travail, les outils de guidage et de rappuyage (14, 15) étant placés en aval dans la direction de déplacement, en rapport à l'élément de châssis (4 ; 5) associé, de telle sorte que dans la position de travail, en regardant par le haut, chaque fois l'articulation (6 ; 7) associée, tout comme l'élément de châssis (4 ; 5) associé soient placés dans une zone centrale des agencements conçus sur les côtés opposés du châssis porteur d'un outil de travail du sol (12 ; 13) et d'un outil de guidage et de rappuyage (14 ; 15) ;
- un système de réglage, qui est assemblé avec l'outil de travail du sol (12 ; 13) et qui est aménagé pour régler une position relative de l'outil de travail du sol (12 ; 13) par rapport à l'outil de guidage et de rappuyage (14 ; 15), ainsi que par rapport au châssis porteur (2) ; et
- un système de pivotement, qui est respectivement assemblé avec les éléments de châssis (4, 5) et qui est aménagé pour déplacer les éléments de châssis (4, 5) avec l'outil de travail du sol (12 ; 13) associé et avec l'outil de guidage et de rappuyage (14 ; 15) associé entre la position de travail et la non-position de travail.

2. Dispositif agricole de travail du sol (1) selon la revendication 1, **caractérisé en ce que** le système de réglage est aménagé pour déplacer les outils de travail du sol (12, 13) au-dessus du sol, chaque fois entre une première position de travail à une première profondeur de travail et une deuxième position de travail à une deuxième profondeur de travail, à cet effet, l'outil de travail du sol (12 ; 13) étant déplacé en rapport à l'outil de guidage et de rappuyage (14 ; 15) respectivement associé, entre une première et une deuxième position relative.

3. Dispositif agricole de travail du sol (1) selon la revendication 2, **caractérisé en ce que** les outils de travail du sol (12, 13) sont déplaçables dans une position de pivotement actuelle de l'élément de châssis (4 ; 5) respectivement associé, en maintien entre la première et la deuxième position de travail.

4. Dispositif agricole de travail du sol (1) selon au moins l'une quelconque des revendications précédentes, **caractérisé en ce que** les outils de travail du sol (12, 13) sont reçus en étant déplaçables sur l'élément de châssis (4 ; 5) associé, chaque fois par l'intermédiaire d'un premier assemblage partiel et d'un deuxième assemblage partiel, séparé de celui-ci.

5. Dispositif agricole de travail du sol (1) selon la revendication 4, **caractérisé en ce que** le premier et le deuxième assemblages partiels sont conçus par rapport à la partie centrale du châssis porteur (2) comme un assemblage partiel proximal et un assemblage partiel distal.

6. Dispositif agricole de travail du sol (1) selon la revendication 4 ou 5, **caractérisé en ce que** le premier et / ou le deuxième assemblage partiel est placé par rapport à l'articulation de manière proximale à la partie centrale du châssis porteur, lorsque l'élément de châssis (4 ; 5) est placé dans la position de travail.

7. Dispositif agricole de travail du sol (1) selon au moins l'une quelconque des revendications précédentes, **caractérisé en ce que** l'outil de travail du sol (12 ; 13) est reçu en étant déplaçable sur l'élément de châssis (4 ; 5) respectivement associé par l'intermédiaire d'un assemblage en parallélogramme (17 ; 18).

8. Dispositif agricole de travail du sol (1) selon la revendication 7, **caractérisé en ce qu'**à l'assemblage en parallélogramme (17 ; 18) est associé un actionneur du système de réglage, par la manoeuvre duquel la position relative de l'outil de travail du sol (12 ; 13) par rapport à l'outil de guidage et de rappuyage (14 ; 15) est réglable.

9. Dispositif agricole de travail du sol (1) selon au moins l'une quelconque des revendications précédentes, **caractérisé en ce que** les outils de guidage et de rappuyage (14, 15) sont reçus chacun sur l'élément de châssis (4 ; 5) associé.

10. Dispositif agricole de travail du sol (1) selon au moins l'une quelconque des revendications précédentes, **caractérisé en ce que** les outils de travail du sol (12, 13) sont conçus chacun avec un agencement de dents de herse rotatives, qui sont placées en-dessous d'un caisson et qui sont logées en rotation, s'étendant le long de l'élément de châssis (4 ; 5) associé.

11. Dispositif agricole de travail du sol (1) selon au moins l'une quelconque des revendications précédentes, **caractérisé en ce que** les outils de guidage et de rappuyage (14, 15) sont conçus chacun avec un rouleau (14a ; 15a) s'étendant le long de l'élément de châssis (4 ; 5) associé.

12. Dispositif agricole de travail du sol (1) selon au moins l'une quelconque des revendications précédentes, **caractérisé en ce que** lors du déplacement de l'élément de châssis (4 ; 5) respectivement associé, des actionneurs du système de pivotement reçus de manière pivotante sur le châssis porteur (2) pivotent entre la position de travail et la position de non-travail, dans un plan de pivotement respectif de l'élément de châssis (4 ; 5).

13. Dispositif agricole de travail du sol (1) selon au moins l'une quelconque des revendications précédentes, **caractérisé en ce qu'**à au moins l'un des outils de travail du sol (12 ; 13) est associé un dispositif de sécurité anti-surcharge qui est aménagé pour déplacer l'au moins un outil de travail du sol (12 ; 13) en fonctionnement, lors d'une surcharge sur l'au moins un outil de travail du sol (12 ; 13) par rapport à l'élément de châssis (4 ; 5) associé, ainsi que par rapport à l'outil de guidage et de rappuyage (14, 15) d'une position de travail momentanée, dans une position relevée.

14. Dispositif agricole de travail du sol (1) selon la revendication 13, **caractérisé en ce que** le dispositif de sécurité anti-surcharge est aménagé pour déplacer automatiquement l'au moins un outil de travail du sol (12 ; 13) entre la position de travail momentanée et la position relevée.

15. Association de machines agricoles, comprenant un tracteur agricole et un dispositif agricole de travail du sol (1) selon au moins l'une quelconque des revendications précédentes, le dispositif agricole de travail du sol (1) étant assemblé avec un attelage à trois points du tracteur agricole.
